# EUROPEAN PATENT SPECIFICATION

(11) **EP 3 660 945 B1**
(45) Date of publication and mention of the grant of the patent: **28.12.2022**
(21) Application number: 18838146.1
(22) Date of filing: 17.07.2018
(51) Int. Cl.: H01M 50/20, H01M 50/30, H01M 10/613, H01M 10/655, H01M 10/667, H01M 10/0525

(54) **POWER SUPPLY DEVICE**
STROMVERSORGUNGSVORRICHTUNG
DISPOSITIF D'ALIMENTATION ÉLECTRIQUE

(30) Priority: 25.07.2017 JP 2017143559
(43) Date of publication of application: 03.06.2020
(73) Proprietor: Sanyo Electric Co., Ltd., Daito-shi, Osaka 574-8534 (JP)
(72) Inventor: HAINO Masami, Osaka-shi, Osaka 540-6207 (JP); MURAMATSU Koichi, Osaka-shi, Osaka 540-6207 (JP); HATTORI Kiyohisa, Osaka-shi, Osaka 540-6207 (JP)
(74) Representative: Vigand, Philippe
(86) International application number: PCT/JP2018/026691
(87) International publication number: WO 2019/021881

(56) References cited:
- EP-A1- 2 648 241
- EP-A1- 2 999 026
- WO-A1-2012/001858
- WO-A1-2012/133710
- WO-A1-2014/024434
- JP-A- 2010 009 910
- JP-A- 2010 108 823
- US-A1- 2011 159 340

## Description

### TECHNICAL FIELD

The present invention relates to a power supply device that includes a plurality of secondary batteries, and in particular, a power supply device that ensures a high level of safety even when an exhaust valve is open.

### BACKGROUND ART

A power supply device that connects a plurality of secondary batteries in series or in parallel can increase a current to be charged or discharged and an output. In this power supply device, when the secondary batteries are abnormally used such as being over-charged or over-discharged, an internal pressure may increase. Therefore, an exhaust valve is provided so as to prevent destruction due to an increase in the internal pressure. When the internal pressure of the batteries increases to exceed a set pressure, the exhaust valve opens and discharges gas so as to prevent an exterior can from being destroyed due to the increase in the internal pressure. In particular, a secondary battery such as a lithium-ion battery that uses a non-aqueous electrolyte discharges high-temperature gas, and thus the exhaust gas causes various harmful effects. Therefore, it is important to quickly discharge the exhaust gas. In order to realize this, a power supply device has been developed in which an exhaust duct is provided in an exhaust port of an exhaust valve of a secondary battery (see PTL 1).

### Citation List

### Patent Literature

PTL 1: Unexamined Japanese Patent Publication No. 2012-15121

Further art is disclosed by the documents US 2011/159340, EP 2 999 026 and EP 2 648 241.

### SUMMARY OF THE INVENTION

### Technical problems

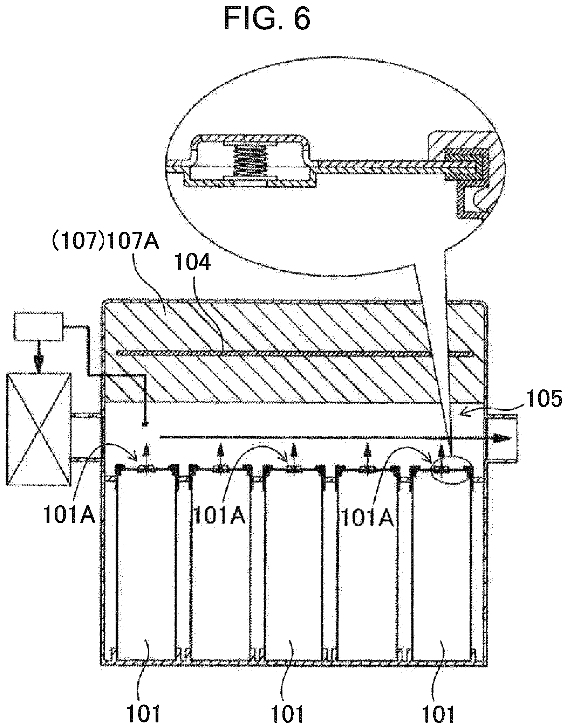

The above-mentioned power supply device is shown in FIG. 6. In this power supply device, on exhaust-side end surface 101A of secondary battery 101 (upper side of secondary battery 101 in the figure), circuit board 104 is disposed while being buried in potting resin 107A. Molten layer 107, which is potting resin 107A, is provided between circuit board 104 and exhaust duct 105. This power supply device discharges exhaust gas from the exhaust valve to an outside through exhaust duct 105. However, when a temperature of the exhaust gas is very high, the exhaust gas that penetrates molten layer 107, which is potting resin 107A, damages circuit board 104. Circuit board 104 provided in the power supply device is mounted with various protection circuits. Therefore, in order to ensure a high level of safety, how damage to circuit board 104 can be inhibited is very important. Moreover, in a power supply device in which battery blocks are disposed in a plurality of rows, a battery block is disposed in an upper row of the exhaust duct. In this power supply device, an exhaust duct is provided between the upper and the lower battery blocks. It is important to surely inhibit a harmful effect that induces a thermal runaway due to damage in the upper battery block by the high-temperature exhaust gas discharged from a secondary battery of the lower battery block. This is because when the exhaust gas from the lower battery block damages the secondary battery of the upper battery block, a thermal runaway is induced and thus a fire may spread to the entire power supply device.

The present invention has been developed to solve disadvantages of the conventional power supply device. An object of the present invention is to provide a power supply device that prevents exhaust gas from damaging a non-heat resisting member such as a circuit board or a battery block, and thereby ensures a high level of safety even when an exhaust valve is open.

### Solution to problem and advantageous effects of invention

The power supply device according to an aspect of the present invention is configured of battery block 3 and non-heat resisting member 10 facing battery block 3 with heat-blocking layer 6 including molten layer 7 interposed between battery block 3 and non-heat resisting member 10. Battery block 3 has a plurality of secondary batteries 1 that are disposed in fixed positions by battery holder 2 and each have an exhaust valve that opens on exhaust-side end surface 1A when an internal pressure increases to a set pressure. Non-heat resisting member 10 is formed of circuit board 4 or any of a plurality of secondary batteries 1. Battery block 3 has secondary batteries 1 disposed in parallel, with some of or all exhaust-side end surfaces 1A of secondary batteries 1 disposed facing non-heat resisting member 10. Air layer 5 disposed between battery block 3 and heat-blocking layer 6. Heat-blocking layer 6 has a layered structure of molten layer 7 and insulating layer 8 having heat-insulating properties of not being deformed by exhaust gas from the exhaust valve, insulating layer 8 being stacked on molten layer 7, and heat-blocking layer 6 having the layered structure of molten layer 7 and insulating layer 8 is disposed between air layer 5 and non-heat resisting member 10.

The above-mentioned power supply device prevents exhaust gas from damaging a non-heat resisting member such a circuit board and a battery block, and thereby ensures a high level of safety even when an exhaust valve is open. This is because in the above-mentioned power supply device, a heat-blocking layer is stacked on an air layer, and at the same time, the heat-blocking layer has a layered structure including a molten layer and an insulating layer. As a result, the molten layer efficiently absorbs heat energy of the exhaust gas, and the insulating layer further prevents the exhaust gas from coming into direct contact with the non-heat resisting member. In particular, the layered structure including the molten layer and the insulating layer increases the heat energy to be absorbed by the molten layer so that the insulating layer inhibits penetration of the exhaust gas. Therefore, the temperature of the exhaust gas considerably decreases and heat is prevented from damaging the non-heat resisting member such a circuit board. Further, even when the exhaust gas penetrates the molten layer, the insulating layer inhibits the exhaust gas from coming into direct contact with the non-heat resisting member, and surely inhibits the non-heat resisting member such as a circuit board. As a result, even when the exhaust valve is open, a very high level of safety can be ensured.

Moreover, in the power supply device of the present invention, molten layer 7 may include first molten layer 7A and second molten layer 7B. First molten layer 7A may be disposed closer to air layer 5 than insulating layer 8, and second molten layer 7B may be disposed closer to non-heat resisting member 10 than insulating layer 8.

Further, in the power supply device of the present invention, first molten layer 7A may be a layer that is subject to thermal decomposition, a chemical reaction, or a layer change by the heat energy of the exhaust gas discharged from the exhaust valve to absorb the heat energy of the exhaust gas.

Further, in the power supply device of the present invention, second molten layer 7B may be a layer that is subject to thermal decomposition, a chemical reaction, or a layer change by the heat energy of the exhaust gas discharged from the exhaust valve to absorb the heat energy of the exhaust gas. Furthermore, in the power supply device of the present invention, second molten layer 7B may be potting resin 12.

Further, in the power supply device of the present invention, non-heat resisting member 10 may be circuit board 4, and first molten layer 7A may be plastic substrate holder 9.

Further, in the power supply device of the present invention, insulating layer 8 may be fiber sheet 13 formed of an aggregate of fibers. Alternatively, in the power supply device of the present invention, insulating layer 8 may be an inorganic board. Alternatively, in the power supply device of the present invention, insulating layer 8 may be a metal sheet.

Furthermore, in the power supply device, battery holder 2 may include protruded rib 25 that protrudes toward heat-blocking layer 6 and provides air layer 5. With this protruded rib 25, air layer 5 may be provided between battery holder 2 and heat-blocking layer 6.

Furthermore, in the power supply device of the present invention, non-heat resisting member 10 may be battery block 3 disposed facing battery block 3.

Furthermore, in the power supply device of the present invention, air layer 5 may be exhaust duct 5A that discharges the exhaust gas from the exhaust valve to an outside.

### BRIEF DESCRIPTION OF DRAWINGS

FIG. 1 is a perspective view of a power supply device according to an exemplary embodiment of the present invention.
FIG. 2 is a plan view of the power supply device shown in FIG. 1.
FIG. 3 is a sectional view of the power supply device shown in FIG. 2 taken along line III-III.
FIG. 4 is a schematic vertical sectional view of a power supply device according to an exemplary embodiment of the present invention.
FIG. 5 is a schematic vertical sectional view of a power supply device according to another exemplary embodiment of the present invention.
FIG. 6 is a schematic vertical sectional view of a conventional power supply device.

### DESCRIPTION OF EMBODIMENTS

Hereinafter, an exemplary embodiment of the present invention will be described with reference to the drawings. It is to be noted, however, that the exemplary embodiments described below are illustrations each embodying a technical idea of the present invention, and the present invention is not specifically limited to the following exemplary embodiments. The components recited in the claims are not limited to the components described in the exemplary embodiments. In particular, it is not intended to limit the scope of the present invention to sizes, materials, shapes, relative arrangement, and the like of the components, which are described in the exemplary embodiments, unless otherwise specified. The sizes and the like are mere explanation examples. The sizes and the positional relation of the components in the drawings may be exaggerated for clearing the explanation in some cases. Components that are identical or of the same quality have the same names and the same reference marks in the following description, and detailed descriptions of these components are omitted where appropriate. Regarding elements that constitute the present invention, one component may constitute a plurality of elements of the elements, or one component may serve as a plurality of elements of the elements. On the other hand, a function of one component may be shared by a plurality of components. Contents described in some examples or some of the exemplary embodiments can be used, for example, in the other examples or exemplary embodiments. A vertical direction described in the specification is specified in the drawings.

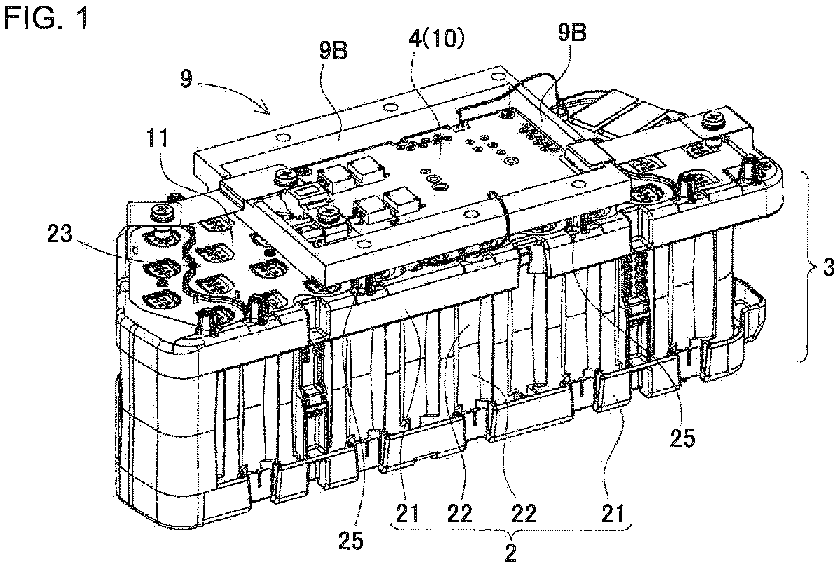

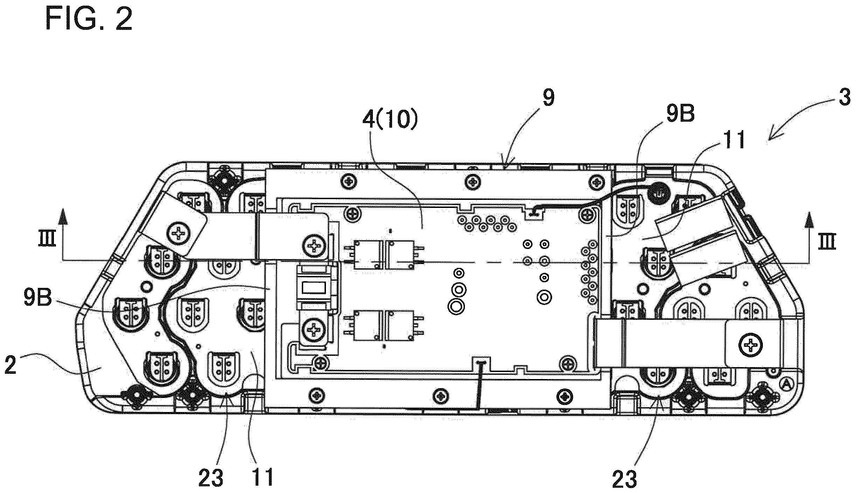

The power supply device shown in FIGS. 1 to 4 includes battery block 3, in which a plurality of secondary batteries 1 is disposed in fixed positions by battery holder 2, and circuit board 4 that is non-heat resisting member 10 disposed facing battery block 3.

Secondary battery 1 is a lithium-ion battery. As secondary battery 1, a non-aqueous electrolyte secondary battery including an exhaust valve can be alternatively used other than a lithium-ion battery. Further, as secondary battery 1, any other types of secondary battery including an exhaust valve currently used or to be developed can be alternatively used instead of a lithium-ion battery.

Secondary battery 1 is a cylindrical battery in which a battery case includes an exterior can whose opening is sealed with a sealing plate, and is filled with a spirally wound electrode and electrolyte. In secondary battery 1, positive and negative electrodes are provided on the sealing plate and a bottom surface of the exterior can. In addition, in secondary battery 1, an exhaust valve is provided on the sealing plate or at the bottom surface of the exterior can. The exhaust valve opens when an internal pressure is higher than a set pressure, and discharges gas to inside so as to prevent the battery case from being destroyed.

The internal pressure of secondary battery 1 may abnormally increase when being charged with or discharging a large current, or being used under a severe external condition. Secondary battery 1 whose internal pressure may abnormally increase includes an exhaust valve (not shown) to prevent rupture. The exhaust valve opens when the internal pressure is more than or equal to the set pressure so as to prevent the rupture due to the increase in the internal pressure. When the exhaust valve of secondary battery 1 is open, a temperature of secondary battery 1 is considerably high. Accordingly, the temperature of the exhaust gas discharged from the exhaust valve that is open is considerably high. In particular, the temperature of a lithium-ion battery may exceed 500 °C.

Battery block 3 configured of the plurality of secondary batteries 1 has a structure in which secondary batteries 1 are arranged in parallel, exhaust-side end surfaces 1A, on which an exhaust valve is provided, are disposed on a same plane, and exhaust-side end surfaces 1A each are provided with air layer 5 so that the exhaust gas discharged from the exhaust valve that opens is discharged into air layer 5. Battery block 3 has respective secondary batteries 1 disposed in fixed positions by means of battery holder 2. Battery holder 2 disposes both end surfaces of secondary batteries 1 on the same planes such that bus bars 11, which are metal sheets, can be connected to the positive and negative electrodes provided at respective ends of secondary batteries 1, and exhaust-side end surfaces 1A are on the same plane. This battery holder 2 is produced through molding of a thermoplastic resin.

In battery holder 2, electrode covers 21 that cover both end surfaces of respective secondary batteries 1 whose both ends are disposed on the same planes are integrally molded with insertion cylinders 22 into which respective secondary batteries 1 are inserted and disposed in fixed positions. On a surface of electrode cover 21, fitting recess 23 is formed for guiding bus bar 11, which is a metal sheet, and disposing bus bar 11 in a fixed position. In addition, electrode cover 21 has electrode window 24, which is an opening for connecting bus bar 11 to an electrode provided on an end surface of each of secondary batteries 1. Electrode window 24 is disposed in a position where a middle portion of the electrode of each of secondary batteries 1 is exposed. Bus bar 11, which is a metal sheet, is welded and connected to the electrode exposed to electrode window 24.

Bus bar 11 is set in fitting recess 23 provided on electrode cover 21 of battery holder 2, and disposed in a fixed position. In this state, bus bar 11 is connected to the electrode by a method such as spot welding, laser welding, or ultrasonic welding. Bus bar 11 connects secondary batteries 1 that are adjacent to each other in parallel or in series.

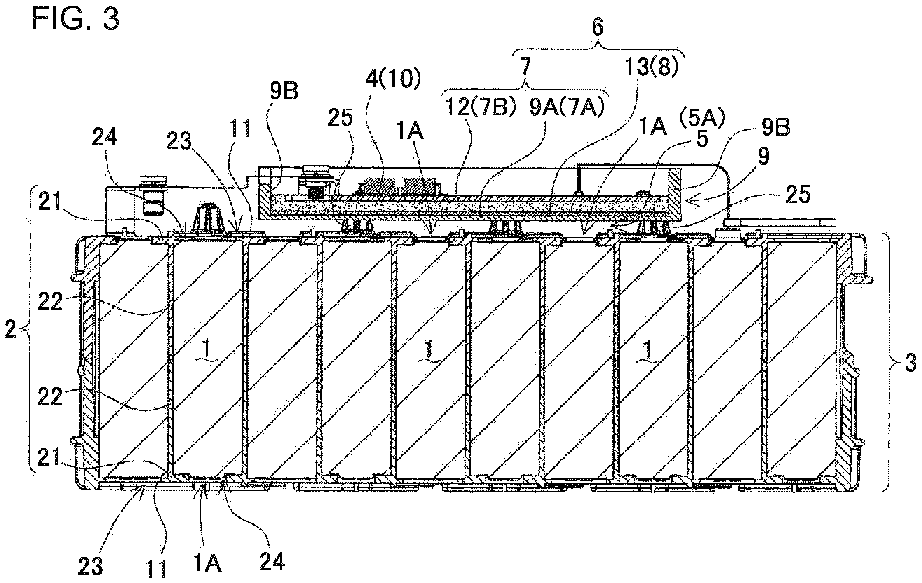

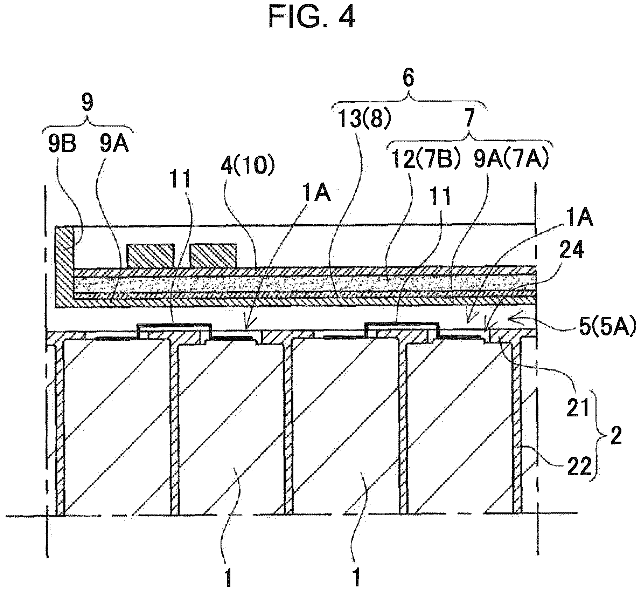

In the power supply device shown in FIGS. 1 to 4, circuit board 4, which is an important component, is disposed facing battery block 3. Circuit board 4 is non-heat resisting member 10 that does not have heat resistance to endure high-temperature exhaust gas discharged from the exhaust valve. Circuit board 4 is mounted with an electronic component on an epoxy resin plate reinforced mainly by glass fibers. This circuit board 4 is mounted with an electronic component that provides a protection circuit that blocks or controls a current through detection of the current that charges or is discharged from secondary battery 1 or a temperature, a computing circuit that calculates a remaining capacity through calculation of a charging or discharging current of secondary battery 1, or the like. When being damaged by high-temperature exhaust gas, this circuit board 4 cannot guarantee normal operation of the protection circuit or the computing circuit. Therefore, it is very important to prevent circuit board 4, which is non-heat resisting member 10 and an important component, from being damaged even when the exhaust valve is open and the exhaust gas is emitted. In order to protect circuit board 4 from the exhaust gas, the power supply device shown in FIGS. 3 and 4 provides air layer 5 and heat-blocking layer 6 between battery block 3 and circuit board 4. Air layer 5 is exhaust duct 5A that discharges the exhaust gas from the exhaust valve to the outside. Heat-blocking layer 6 has a layered structure of molten layer 7 and insulating layer 8, and protects non-heat resisting member 10 such as circuit board 4 from high-temperature exhaust gas discharged from secondary battery 1 into exhaust duct 5A.

Heat-blocking layer 6 protects circuit board 4 from the high-temperature exhaust gas discharged from secondary battery 1 into air layer 5. An exhaust valve is provided on one end surface of secondary battery 1, and this end surface is exhaust-side end surface 1A. In a cylindrical battery, an exhaust valve is provided on a bottom surface of an exterior can or on a sealing plate. Therefore, for a secondary battery in which an exhaust valve is provided on the bottom surface of the exterior can, the bottom surface of the exterior can is the exhaust-side end surface, whereas for secondary battery 1 in which an exhaust valve is provided on the sealing plate, the side of the sealing plate is exhaust-side end surface 1A.

Battery block 3 does not necessarily have all of exhaust-side end surfaces 1A of secondary batteries 1 disposed on the same plane. Battery block 3 has secondary batteries 1 connected in parallel so as to face the same direction, and secondary batteries 1 connected in series so as to be alternately opposite to each other. As shown in the sectional view of FIG. 3, battery block 3 has adjacent secondary batteries 1 so as to be alternately opposed to each other and connected in series. Therefore, circuit board 4 is disposed facing some of exhaust-side end surfaces 1A of secondary batteries 1. The exhaust gas discharged from exhaust-side end surface 1A of secondary battery 1 is discharged into air layer 5. In order to protect circuit board 4, which is an important component, from the high-temperature gas discharged into air layer 5, heat-blocking layer 6 is provided between air layer 5 and circuit board 4.

Molten layer 7 of heat-blocking layer 6 is subject to thermal decomposition, a chemical reaction, or a layer change by the heat energy of the exhaust gas discharged into air layer 5 to absorb the heat energy of the exhaust gas. Molten layer 7 does not absorb the heat energy of the exhaust gas through an increase in the temperature of molten layer 7 itself. Instead, molten layer 7 absorbs the heat energy of the exhaust gas through thermal decomposition, a chemical reaction, or a layer change of molten layer 7 itself. When an object absorbs heat energy through an increase in the temperature of the object itself, the heat energy is proportional to specific heat. In contrast, when an object absorbs the heat energy through thermal decomposition, a chemical reaction, or a layer change of the object itself, the heat energy is proportional to heat of evaporation incomparable with specific heat, and thus is extremely large. Molten layer 7 that absorbs a large amount of heat energy can remarkably reduce the temperature of the high-temperature exhaust gas.

Moreover, the power supply device of FIGS. 3 and 4 has two-layered molten layer 7 formed of first molten layer 7A and second molten layer 7B stacked on both surfaces of insulating layer 8, where first molten layer 7A is stacked between insulating layer 8 and air layer 5, whereas second molten layer 7B is stacked between insulating layer 8 and circuit board 4. First molten layer 7A is bottom plate 9A of substrate holder 9 forming a thermoplastic resin. First molten layer 7A that is also used as substrate holder 9 forms the thermoplastic resin into a box shape having an upper opening and provided with side walls 9B around bottom plate 9A, and allows circuit board 4 to be disposed in a fixed position on a top surface of bottom plate 9A. Substrate holder 9 allows circuit board 4 to be disposed in the fixed position so as to protect circuit board 4 from the high-temperature exhaust gas with bottom plate 9A, which is first molten layer 7A. First molten layer 7A that is also used as substrate holder 9 is formed of a thermoplastic resin having a melting point or thermal decomposition temperature of 400 °C or less such as polyethylene, polypropylene, an acrylonitrile-butadiene-styrene (ABS) resin, polycarbonate, and an acrylic resin.

Second molten layer 7B is urethane potting resin 12. Potting resin 12 that has not been cured and is liquid is filled in substrate holder 9, and provided between insulating layer 8 and circuit board 4. Potting resin 12 that has not been cured is injected into battery holder 2, intrudes into a gap between insulating layer 8 and circuit board 4, and is brought into close contact with insulating layer 8 and circuit board 4. Potting resin 12 that has not been cured is injected into substrate holder 9 after insulating layer 8 is stacked on bottom plate 9A of substrate holder 9 and circuit board 4 is fixed in a fixed position.

Insulating layer 8 is a layer having heat-insulating properties of not being deformed by the high-temperature exhaust gas discharged from the exhaust valve, preferably heat-insulating properties of not being deformed at 600°C, and is fiber sheet 13 having heat resistance in which heat-resistant fibers such as inorganic fibers, carbon fibers, or metal fibers are three-dimensionally aggregated. Alternatively, a board having heat resistance and heat insulation such as an inorganic board or metal sheet can be used for insulating layer 8.

First molten layer 7A is subject to thermal decomposition, a chemical reaction, or a layer change by the heat energy of the exhaust gas. Therefore, the exhaust gas may penetrate first molten layer 7A. If the exhaust gas penetrates heat-blocking layer 6, circuit board 4, which is an important component, is damaged. Therefore, insulating layer 8 is not deformed by the exhaust gas, inhibits the penetration of the exhaust gas, and further insulates the heat to prevent an increase in the temperature of circuit board 4 due to the exhaust gas. First molten layer 7A absorbs the heat energy of the exhaust gas through thermal decomposition, a chemical reaction, or a layer change of first molten layer 7A itself. Therefore, first molten layer 7A can increase the heat energy to be absorbed. Since molten layer 7 absorbs the heat energy through a modification of molten layer 7 itself, the exhaust gas may penetrate molten layer 7. However, insulating layer 8 stacked on molten layer 7 surely inhibits the penetration of the exhaust gas even if heat energy that insulating layer 8 can absorb is smaller than heat energy that molten layer 7 can absorb. Second molten layer 7B does not directly come into contact with the exhaust gas because of insulating layer 8 disposed between second molten layer 7B and air layer 5, but is disposed so as to be thermally connected with insulating layer 8. Accordingly, when insulating layer 8 has a high temperature, second molten layer 7B absorbs heat from insulating layer 8 through thermal decomposition, a chemical reaction, or a layer change of second molten layer 7B itself, and decreases the heat energy transferred to circuit board 4 so as to more surely protect circuit board 4.

As described above, heat-blocking layer 6 that has molten layer 7 and insulating layer 8 being stacked efficiently absorbs the heat energy of the exhaust gas with molten layer 7 so as to decrease the temperature of the exhaust gas, and inhibits the penetration of the exhaust gas with insulating layer 8 so as to insulate the heat. As a result, circuit board 4 can be surely prevented from being damaged by the high-temperature exhaust gas. In particular, as shown in FIGS. 3 and 4, heat-blocking layer 6, which has two-layered molten layer 7 stacked on both surfaces of insulating layer 8 where first molten layer 7A and second molten layer 7B are in close contact with both surfaces of insulating layer 8, decreases the temperature of the exhaust gas by absorbing the heat energy of the exhaust gas discharged into air layer 5 with both of first molten layer 7A and second molten layer 7B, and further inhibits the penetration of the exhaust gas with insulating layer 8. As a result, heat-blocking layer 6 can ideally protect circuit board 4, and surely inhibit circuit board 4 from being damaged. However, in the power supply device of the present invention, molten layer 7 does not have to be stacked on both surfaces of insulating layer 8 to form heat-blocking layer 6. Alternatively, for example, only the first molten layer may be stacked on the insulating layer such that the heat-blocking layer has a two-layered structure of a molten layer and an insulating layer. This molten layer may be formed into a sheet without being a substrate holder, and the circuit board may be disposed on top of the sheet with the insulating layer interposed.

The power supply device of FIG. 3 is provided with air layer 5 on an upper surface of battery block 3 and between battery block 3 and heat-blocking layer 6. In the power supply device of this figure, first molten layer 7A is bottom plate 9A of substrate holder 9. Therefore, a gap is provided between the surfaces of bottom plate 9A of substrate holder 9 and battery block 3 facing each other to form air layer 5. In this structure, air layer 5 can be formed by disposing substrate holder 9 away from battery block 3. The structure in which substrate holder 9 is fixed with a gap provided between substrate holder 9 and battery block 3 can be achieved, as shown in FIGS. 1 and 3, by providing battery holder 2 of battery block 3 with a plurality of protruded ribs 25 integrally molded to protrude toward bottom plate 9A of substrate holder 9. Protruded rib 25 protrudes from a surface of electrode cover 21 of battery holder 2 that covers exhaust-side end surface 1A of secondary battery 1. Protruded rib 25 may protrude from bottom plate 9A of substrate holder 9 toward electrode cover 21 of battery holder 2. Alternatively, protruded rib 25 may be configured as an independent component. In this structure, air layer 5 can be provided between battery block 3 and bottom plate 9A of substrate holder 9 by protruded rib 25. Therefore, a vertical width of air layer 5 can be accurately specified by a protruding height of protruded rib 25. Since bottom plate 9A of substrate holder 9 constitutes first molten layer 7A of heat-blocking layer 6, air layer 5 is provided between first molten layer 7A and electrode cover 21 of battery holder 2. Electrode cover 21 of battery holder 2 that covers exhaust-side end surface 1A of secondary battery 1 is disposed on a surface of battery block 3 facing air layer 5. Through screwing of a set screw (not shown) that penetrates substrate holder 9 to protruded rib 25, substrate holder 9 can be fixed to a fixed position of battery holder 2 of battery block 3.

However, although not shown, without using the set screw that penetrates the substrate holder, the air layer can be provided through disposition of the protruded rib between the bottom plate of the substrate holder and the battery block. For example, the circuit board can be fixed to the fixed position via a lead plate fixed to the circuit board, and the circuit board and the substrate holder can be disposed in the fixed positions via the potting resin, which is the second molten layer. For the lead plate fixed to the circuit board, a thick metal sheet is used having a low resistance so as to reduce a voltage drop through a supply of a large current. A thick metal sheet can stably fix the circuit board to the battery block. Therefore, the circuit board and the substrate holder can be disposed in specified positions of the battery block via the lead plate. Moreover, the circuit board can be disposed in the fixed position of the battery block via the lead plate, and further, the substrate holder can be disposed in the fixed position through screwing of the substrate holder to the battery block.

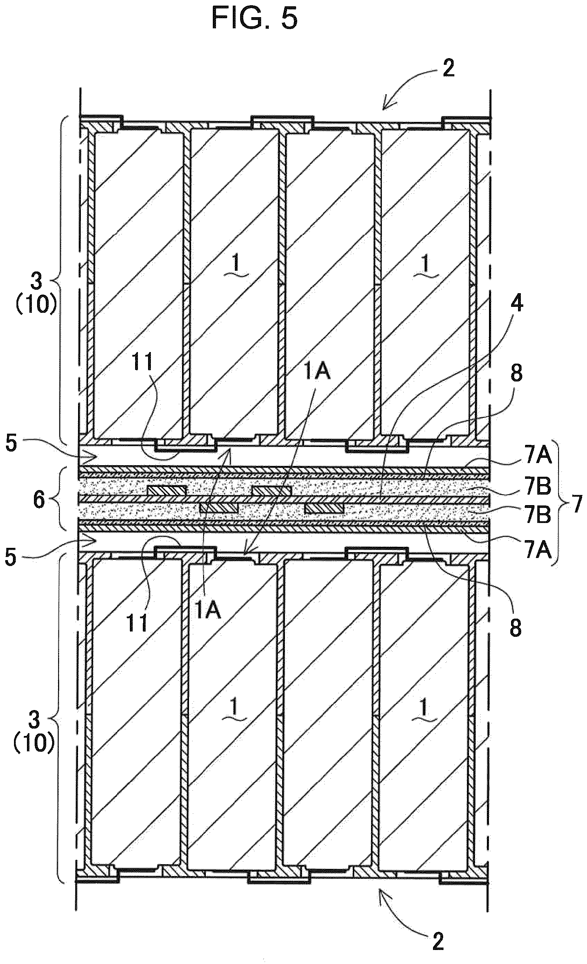

In the above-mentioned power supply device, non-heat resisting member 10 is circuit board 4. However, as shown in FIG. 5, in the power supply device in which battery blocks 3 are disposed in a plurality of rows, non-heat resisting member 10 is battery block 3 that is stacked. In the power supply device of FIG. 5, air layer 5 and heat-blocking layer 6 are provided between battery blocks 3 so as to prevent exhaust gas discharged from secondary battery 1 of one of battery blocks 3 from damaging another of battery blocks 3. In the power supply device including battery blocks 3 stacked in the plurality of rows, exhaust gas is discharged from respective battery blocks 3. Therefore, air layer 5 is provided on sides of respective battery blocks 3, and heat-blocking layer 6 is provided between air layers 5 provided on the sides of respective battery blocks 3 so as to prevent the exhaust gas discharged from secondary battery 1 of one of battery blocks 3 from damaging the other of battery blocks 3.

### INDUSTRIAL APPLICABILITY

The power supply device according to the present invention is a power supply device including a plurality of secondary batteries including an exhaust valve, and can be advantageously used in applications that require a high level of safety.

### REFERENCE MARKS IN THE DRAWINGS

1: secondary battery
1A: exhaust-side end surface
2: battery holder
3: battery block
4: circuit board
5: air layer
6: heat-blocking layer
7: molten layer
7A: first molten layer
7B: second molten layer
8: insulating layer
9: substrate holder
9A: bottom plate
9B: side wall
10: non-heat resisting member
11: bus bar
12: potting resin
13: fiber sheet
21: electrode cover
22: insertion cylinder
23: fitting recess
24: electrode window
25: protruded rib
101: secondary battery
101A: exhaust-side end surface
104: circuit board
105: exhaust duct
107: molten layer
107A: potting resin

## Claims

1. A power supply device configured of a battery block (3) and a non-heat resisting member (10) facing the battery block (3) with a heat-blocking layer (6) including a molten layer (7) interposed between the battery block (3) and the non-heat resisting member (10), the battery block (3) having a plurality of secondary batteries (1) that are disposed in fixed positions by a battery holder (2) and each have an exhaust valve that opens on an exhaust-side end surface when an internal pressure increases to a set pressure, the non-heat resisting member (10) being formed of a circuit board (4) or any of a plurality of secondary batteries (1),
the battery block (3) having the secondary batteries (1) disposed in parallel, with some of or all exhaust-side end surfaces of the secondary batteries (1) disposed facing the non-heat resisting member (10),
with an air layer disposed between the battery block (3) and the heat-blocking layer (6),
wherein
the heat-blocking layer (6) has a layered structure of the molten layer (7) and an insulating layer (8) having heat-insulating properties of not being deformed by exhaust gas from the exhaust valve, the insulating layer (8) being stacked on the molten layer (7), and
the heat-blocking layer (6) having the layered structure of the molten layer (7) and the insulating layer (8) is disposed between the air layer and the non-heat resisting member (10).

2. The power supply device according to claim 1, wherein
the molten layer (7) is formed of a first molten layer (7A) and a second molten layer (7B), the first molten layer (7A) is disposed closer to the air layer than the insulating layer (8), and the second molten layer (7B) is disposed closer to the non-heat resisting member (10) than the insulating layer (8).

3. The power supply device according to claim 2, wherein
the first molten layer (7A) is a layer subject to thermal decomposition, a chemical reaction, or a layer change by heat energy of exhaust gas discharged from the exhaust valve to absorb the heat energy of the exhaust gas.

4. The power supply device according to claim 2, wherein
the second molten layer (7B) is a layer subject to thermal decomposition, a chemical reaction, or a layer change by heat energy of exhaust gas discharged from the exhaust valve to absorb the heat energy of the exhaust gas.

5. The power supply device according to claim 4, wherein
the second molten layer (7B) is a potting resin (12).

6. The power supply device according to claim 4 or 5, wherein
the non-heat resisting member (10) is a circuit board (4), and
the first molten layer (7A) is a plastic substrate holder (9).

7. The power supply device according to any one of claims 1 to 6, wherein
the insulating layer (8) is a fiber sheet (13) formed of an aggregate of fibers.

8. The power supply device according to any one of claims 1 to 6, wherein
the insulating layer (8) is an inorganic board.

9. The power supply device according to claim 7, wherein
the insulating layer (8) is a metal sheet.

10. The power supply device according to any one of claims 1 to 9, wherein
the battery holder (2) includes a protruded rib (25) protruding toward the heat-blocking layer (6) and providing the air layer (5), and with the protruded rib, the air layer (5) is provided between the battery holder (2) and the heat-blocking layer (6).

11. The power supply device according to any one of claims 1 to 5, and 7 to 10, wherein
the non-heat resisting member (10) is a battery block (3) disposed facing the battery block (3).

12. The power supply device according to any one of claims 1 to 11, wherein
the air layer (5) is an exhaust duct (5A) that discharges exhaust gas from the exhaust valve to an outside.

## Patentansprüche

1. Stromversorgungsvorrichtung, die aus einem Batterieblock (3) und einem nicht hitzebeständigen Element (10) ausgestaltet ist, das dem Batterieblock (3) zugewandt ist, mit einer hitzeabweisenden Schicht (6), die eine geschmolzene Schicht (7) umfasst, die zwischen dem Batterieblock (3) und dem nicht hitzebeständigen Element (10) zwischengelegt ist, wobei der Batterieblock (3) eine Vielzahl von Sekundärbatterien (1) aufweist, die an festen Positionen durch einen Batteriehalter (2) angeordnet sind und jeweils ein Abgasventil aufweisen, das sich auf einer abgasseitigen Endoberfläche öffnet, wenn ein Innendruck auf einen eingestellten Druck zunimmt, wobei das nicht hitzebeständige Element (10) aus einer Leiterplatte (4) oder einer beliebigen von einer Vielzahl von Sekundärbatterien (1) gebildet ist,
wobei der Batterieblock (3) die Sekundärbatterien (1) parallel angeordnet aufweist, wobei einige oder sämtliche abgasseitigen Endoberflächen der Sekundärbatterien (1) dem nicht hitzebeständigen Element (10) zugewandt angeordnet sind,
wobei eine Luftschicht zwischen dem Batterieblock (3) und der hitzeabweisenden Schicht (6) angeordnet ist,
wobei
die hitzeabweisende Schicht (6) eine geschichtete Struktur aus der geschmolzenen Schicht (7) und einer isolierenden Schicht (8) aufweist, die hitzeisolierende Eigenschaften aufweist, nicht durch Abgas von dem Abgasventil verformt zu werden, wobei die isolierende Schicht (8) auf der geschmolzenen Schicht (7) gestapelt ist, und
die hitzeabweisende Schicht (6), welche die geschichtete Struktur aus der geschmolzenen Schicht (7) und der isolierenden Schicht (8) aufweist, zwischen der Luftschicht und dem nicht hitzebeständigen Element (10) angeordnet ist.

2. Stromversorgungsvorrichtung nach Anspruch 1, wobei
die geschmolzene Schicht (7) aus einer ersten geschmolzenen Schicht (7A) und einer zweiten geschmolzenen Schicht (7B) gebildet ist, wobei die erste geschmolzene Schicht (7A) näher an der Luftschicht angeordnet ist als die isolierende Schicht (8) und die zweite geschmolzene Schicht (7B) näher an dem nicht hitzebeständigen Element (10) angeordnet ist als die isolierende Schicht (8).

3. Stromversorgungsvorrichtung nach Anspruch 2, wobei
die erste geschmolzene Schicht (7A) eine Schicht ist, die thermischer Zersetzung, einer chemischen Reaktion oder einer Schichtänderung durch Hitzeenergie von Abgas ausgesetzt ist, das von dem Abgasventil abgelassen wird, um die Hitzeenergie des Abgases zu absorbieren.

4. Stromversorgungsvorrichtung nach Anspruch 2, wobei
die zweite geschmolzene Schicht (7B) eine Schicht ist, die thermischer Zersetzung, einer chemischen Reaktion oder einer Schichtänderung durch Hitzeenergie von Abgas ausgesetzt ist, das von dem Abgasventil abgelassen wird, um die Hitzeenergie des Abgases zu absorbieren.

5. Stromversorgungsvorrichtung nach Anspruch 4, wobei
die zweite geschmolzene Schicht (7B) ein Vergussharz (12) ist.

6. Stromversorgungsvorrichtung nach Anspruch 4 oder 5, wobei
das nicht hitzebeständige Element (10) eine Leiterplatte (4) ist, und
die erste geschmolzene Schicht (7A) ein Kunststoff-Substrathalter (9) ist.

7. Stromversorgungsvorrichtung nach einem der Ansprüche 1 bis 6, wobei
die isolierende Schicht (8) eine Faserschicht (13) ist, die aus einem Aggregat von Fasern gebildet ist.

8. Stromversorgungsvorrichtung nach einem der Ansprüche 1 bis 6, wobei
die isolierende Schicht (8) eine anorganische Platte ist.

9. Stromversorgungsvorrichtung nach Anspruch 7, wobei
die isolierende Schicht (8) ein Metallblech ist.

10. Stromversorgungsvorrichtung nach einem der Ansprüche 1 bis 9, wobei
der Batteriehalter (2) eine hervorstehende Rippe (25) umfasst, die hin zu der hitzeabweisenden Schicht (6) hervorsteht und die Luftschicht (5) bereitstellt, und mit der hervorstehenden Rippe die Luftschicht (5) zwischen dem Batteriehalter (2) und der hitzeabweisenden Schicht (6) bereitgestellt ist.

11. Stromversorgungsvorrichtung nach einem der Ansprüche 1 bis 5 und 7 bis 10, wobei
das nicht hitzebeständige Element (10) ein Batterieblock (3) ist, der dem Batterieblock (3) zugewandt angeordnet ist.

12. Stromversorgungsvorrichtung nach einem der Ansprüche 1 bis 11, wobei
die Luftschicht (5) ein Abgaskanal (5A) ist, der Abgas von dem Abgasventil zu einer Außenseite ablässt.

## Revendications

1. Dispositif d'alimentation électrique constitué d'un bloc de batteries (3) et d'un élément non résistant à la chaleur (10) faisant face au bloc de batteries (3) avec une couche bloquant la chaleur (6) comprenant une couche fondue (7) interposée entre le bloc de batteries (3) et l'élément non résistant à la chaleur (10), le bloc de batteries (3) ayant une pluralité de batteries rechargeables (1) qui sont disposées dans des positions fixes par un support de batteries (2) et ont chacune une vanne d'échappement qui s'ouvre sur une surface d'extrémité du côté échappement quand la pression interne augmente jusqu'à une pression de consigne, l'élément non résistant à la chaleur (10) étant formé d'une carte de circuit (4) ou de l'une quelconque parmi une pluralité de batteries rechargeables (1),
le bloc de batteries (3) ayant les batteries rechargeables (1) disposées en parallèle, certaines ou la totalité des surfaces d'extrémité du côté échappement des batteries rechargeables (1) étant disposées en faisant face à l'élément non résistant à la chaleur (10),
une couche d'air étant disposée entre le bloc de batteries (3) et la couche bloquant la chaleur (6),
dans lequel
la couche bloquant la chaleur (6) a une structure stratifiée de la couche fondue (7) et d'une couche isolante (8) ayant des propriétés d'isolation thermique qui n'est pas déformée par le gaz d'échappement provenant de la vanne d'échappement, la couche isolante (8) étant empilée sur la couche fondue (7), et
la couche bloquant la chaleur (6) ayant la structure stratifiée de la couche fondue (7) et de la couche isolante (8) est disposée entre la couche d'air et l'élément non résistant à la chaleur (10).

2. Dispositif d'alimentation électrique selon la revendication 1, dans lequel
la couche fondue (7) est formée d'une première couche fondue (7A) et d'une deuxième couche fondue (7B), la première couche fondue (7A) est disposée plus proche de la couche d'air que la couche isolante (8), et la deuxième couche fondue (7B) est disposée plus proche de l'élément non résistant à la chaleur (10) que la couche isolante (8).

3. Dispositif d'alimentation électrique selon la revendication 2, dans lequel
la première couche fondue (7A) est une couche susceptible d'une décomposition thermique, d'une réaction chimique, ou d'un changement de couche par l'énergie thermique du gaz d'échappement évacué depuis la vanne d'échappement pour absorber l'énergie thermique du gaz d'échappement.

4. Dispositif d'alimentation électrique selon la revendication 2, dans lequel
la deuxième couche fondue (7B) est une couche susceptible d'une décomposition thermique, d'une réaction chimique, ou d'un changement de couche par l'énergie thermique du gaz d'échappement évacué depuis la vanne d'échappement pour absorber l'énergie thermique du gaz d'échappement.

5. Dispositif d'alimentation électrique selon la revendication 4, dans lequel
la deuxième couche fondue (7B) est une résine d'empotage (12) .

6. Dispositif d'alimentation électrique selon la revendication 4 ou 5, dans lequel
l'élément non résistant à la chaleur (10) est une carte de circuit (4), et
la première couche fondue (7A) est un support de substrat plastique (9).

7. Dispositif d'alimentation électrique selon l'une quelconque des revendications 1 à 6, dans lequel
la couche isolante (8) est une feuille de fibres (13) formée d'un agrégat de fibres.

8. Dispositif d'alimentation électrique selon l'une quelconque des revendications 1 à 6, dans lequel
la couche isolante (8) est un panneau inorganique.

9. Dispositif d'alimentation électrique selon la revendication 7, dans lequel
la couche isolante (8) est une tôle métallique.

10. Dispositif d'alimentation électrique selon l'une quelconque des revendications 1 à 9, dans lequel
le support de batteries (2) comprend une nervure saillante (25) qui fait saillie en direction de la couche bloquant la chaleur (6) et formant la couche d'air (5) et, avec la nervure saillante, la couche d'air (5) est formée entre le support de batteries (2) et la couche bloquant la chaleur (6).

11. Dispositif d'alimentation électrique selon l'une quelconque des revendications 1 à 5 et 7 à 10, dans lequel
l'élément non résistant à la chaleur (10) est un bloc de batteries (3) disposé en faisant face au bloc de batteries (3) .

12. Dispositif d'alimentation électrique selon l'une quelconque des revendications 1 à 11, dans lequel
la couche d'air (5) est une conduite d'échappement (5A) qui évacue le gaz d'échappement depuis la vanne d'échappement vers l'extérieur.
